# EUROPÄISCHE PATENTANMELDUNG

(11) **EP 2 420 661 A1**
(43) Veröffentlichungstag der Anmeldung: **22.02.2012**
(21) Anmeldenummer: 10172982.0
(22) Anmeldetag: 16.08.2010
(51) Int. Cl.: F02B 43/10, F02B 47/02, F02M 21/02

(54) **Hybride Expansions-Verbrennungskraftmaschine mit Ventilsteuerung zum Betrieb mit regenerativen Energieträgern**

(71) Anmelder: Zenker, Wolfgang, 4810 Gmunden (AT)
(72) Erfinder: Zenker, Wolfgang, 4810 Gmunden (AT)

(57) **Zusammenfassung**

Die Kraftmaschine **(****FIG. 9****)** wird mit zwei Energieträgern betrieben, welche Edukte der Elektrolyse von Wasser sind:
*Sauerstoff, dieser auf hohen Druck verdichtet;*
*Wasserstoff in verflüssigter Form.*

Das Arbeitsmedium wird durch einen *rotierendenGasgemischverteile***(4)** gesteuert, welcher Ventile ersetzt. Der Arbeitsprozess ist ein *geschlossener Kreisprozess* und besteht aus zwei Teilen:
Dem *Expansionsvorgang eines Gasgemisches* bestehend aus hoch verdichtetem Sauerstoff und überhitztem Wasserdampf;
einem *Verbrennungskraftprozess* mit zugefügtem Wasserstoff als Brennstoff.

Die Maschine ist deshalb eine *Hybride Expansions-Verbrennungskraftmaschine mit Ventilsteuerung zum Betrieb mit regenerativen Energieträgern.*

Der für den Expansions-Teilprozess benötigte Sauerstoff wird *verlustarm* durch isentrope Umladung aus einem Hochdruckspeicher auf den Arbeitsdruck entspannt. Durch die *Rekuperation***(6)** des Energieinhaltes der heißen Abgase wird ein hoher Wirkungsgrad erzielt. Ein *Nacherhitzer***(7)** bewirkt den definierten Ausgangszustand des Kreisprozesses. Der Kraftprozess wird damit durch *innere* Verbrennung im Motor und *äußere* Verbrennung im Nacherhitzer gespeist. Die Maschine soll die ökonomische und ökologisch verträgliche Mobilität ohne den Einsatz von fossilen Treibstoffen ermöglichen.

## Beschreibung

### Technisches Gebiet

Die Kraftmaschine gehört zum Gebiet der thermodynamischen Kraftmaschinen mit Ventilsteuerung. Sie vereinigt in ihrer Funktion Merkmale des *Dampfmotors,* der *Verbrennungskraftmaschine* und der *Expansionsmaschine.* Der Dampfmotor nutzt als Arbeitsmedium Wasserdampf; die Wärmezufuhr erfolgt durch äußere Verbrennung des Treibstoffes. Bei der Verbrennungskraftmaschine erfolgt die Wärmezufuhr durch innere Verbrennung des Treibstoffes in der Maschine. Der Expansionsmaschine wird das Arbeitsmedium aus einem externen Druckspeicher zugeführt.

### Stand der Technik

Es werden gegenwärtig in der Kraftfahrzeugtechnik Alternativen für den Ersatz von fossilen Treibstoffen gesucht. Der Energieträger Wasserstoff wird als alternativer Treibstoff insbesondere in herkömmlichen, geringfügig modifizieren Verbrennungsmotoren eingesetzt. Ebenso sind Antriebe mit Brennstoffzellen als Energiewandler bereits im Einsatz. Es ist auch ein Wasserstoffmotor bekannt mit dem Titel: *Hydrogen motor*US 6698183 (THORDARSON, PETUR) 02.03.2004 . In diesem wird Wasserstoff zusammen mit Sauerstoff unter Zugabe von Wasser verbrannt. Dieser *primäre Vorgang* findet in einer *Brennkammerstatt.* Das expandierende Verbrennungsprodukt übt sodann *sekundär* Druck auf eine *Hydraulikflüssigkeit* als Arbeitsmedium aus, welche über ein System von mehreren Ventilen mechanische Arbeit auf einen Kolben in einem Zylinder verrichtet. Die Wärme wird damit durch *äußere Verbrennung* bereitgestellt.

Druckluft unter hohem Druck in einem Speicher außerhalb der Maschine wird als Arbeitsmedium in Expansionsmaschinen eingesetzt, beispiels-weise in einem Antrieb für Kraftfahrzeuge, entwickelt von der Firma MDI: Motor Development International *http.llwww.mdi.lu*/*moteurs.php*

### Kurzbeschreibung der Erfindung

Die Kraftmaschine wird mit zwei *Energieträgern* betrieben: unter *hohem Druck gespeicherter Sauerstoff* und *Wasserstoff in verflüssigter Form.* Beide sind Edukte der Elektrolyse von Wasser, das als Verbrennungs-produkt des Prozesses wieder in den regenerativen Kreislauf zurück- geführt wird.

Beide Energieträger verrichten in diesem Prozess Arbeit durch *zwei Expansionen.* Das Arbeitsmedium ist ein *Gasgemisch* bestehend aus den Komponenten *überhitzter Wasserdampf* und *Sauerstoff* unter hohem Druck.

Dieses entlädt sich in einem ersten Schritt aus einem *Startvolumen definierter Größe* in die Maschine. Nach der Rückverdichtung erfolgt eine *zweite Expansion* nach der *Verbrennung von* Wasserstoff, der diesem Gemisch in der Maschine zugeführt wird.

Beide Expansionen finden daher auf direktem Wege im Zylinder der Maschine statt. Das Arbeitsmedium wird durch eine Einrichtung, den *Gasgemischverteiler* gesteuert*,* welcher die Aufgabe von Ventilen wahrnimmt. Diese Maschine ist deshalb eine *hybride Expansions- Verbrennungskraftmaschine mit Ventilsteuerung zum Betrieb mit regenerativen Energieträgern* 1.

Synonym wird die Bezeichnung *hybride Gasgemischmaschine* verwendet.

Das Verbrennungsprodukt ist reines Wasser. Es wird als Komponente des *Gasgemisches* in einem *geschlossenen Kreisprozess* in der Maschine und ihren Nebenaggregaten geführt 1.

Der Sauerstoff ist in dem Gasgemisch immer in einer *zündfähigen Menge* für den zugeführten Wasserstoff enthalten 1.

Die Umwandlung von thermischer Energie in mechanische Energie erfolgt durch das Gasgemisch *unmittelbar* im Zylinder einer Verbrennungskraft-maschine, wie dies auch durch die Verbrennungsgase der bekannten Verbrennungskraftmaschinen geschieht 1.

### Kurze Beschreibung der Zeichnungsfiguren

1. FIG. 1 ist eine Blockdarstellung der eingesetzten Energieressourcen und ihrer technischen Komponenten.
2. FIG. 2 ist eine schematische Darstellung des Motors, des gesamten Arbeitszyklus und dessen Steuerung.
3. FIG. 3 gibt einen Überblick über die Ventilsteuerung.
4. FIG. 4 ist eine Schemazeichnung des Gasgemischverteilers.
5. FIG. 5 ist eine Blockdarstellung des Motors und seiner Nebenaggregate zur Steuerung von Arbeitsmedium und Brennstoff.
6. FIG. 6 ist das Schema eines Enthalpie- Entropie- Diagramms von Wasserdampf zur Darstellung des Arbeitsprozesses.
7. FIG.7 ist ein Wärmediagramm zur Darstellung des Kreisprozesses und der beteiligten Prozesskomponenten.
8. FIG. 8 ist eine Blockdarstellung der Prozessregelung und der zugehörigen Anlagenteile.
9. FIG.9 ist ein Blockdiagramm, welches das Zusammenwirken von Motor und zugehörigen Nebenaggregaten zeigt.
10**.** **FIG. 10** zeigt den konstruktiven Grundgedanken der Gasgemischeinheit.
11. **FIG. 11** ist eine Blockdarstellung der Einrichtung zur Druckminderung des Sauerstoffs mit Funktionstabelle.

### Beschreibung der Ausführungsarten

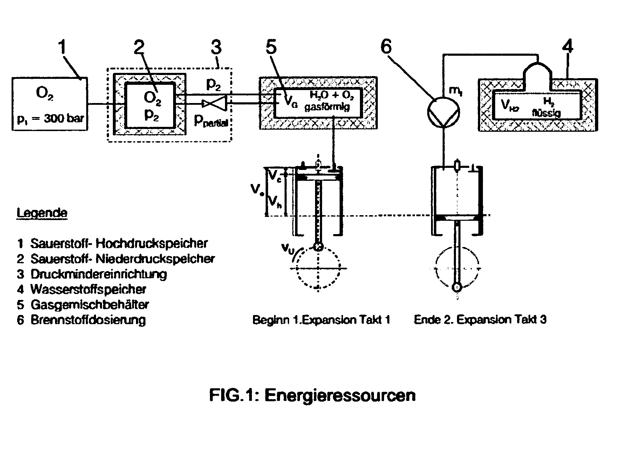

Die genannten Energieressourcen sind in **FIG.1** dargestellt Abbildung. Dies sind flüssiger Wasserstoff und gasförmiger Sauerstoff, der in einem *Hochdruckspeicher***(1)** unter hohem Druck von beispielsweise 300 bar gespeichert wird 1.

In einer *Druckmindereinrichtung***(3)*,*** die einen Niederdruckspeicher **(2)** enthält, wird dieser Druck verlustarm auf zwei Arbeitsdrücke entspannt. Der Sauerstoff wird bedarfsgerecht einem *Gasgemischbehälter***(5)** zugeführt.

In diesem befindet sich als Arbeitsmedium ein Gasgemisch, bestehend aus *überhitztem Wasserdampf* und *Sauerstoff* in einem definierten, kon-stant zu haltenden physikalischen Zustand von Druck und Temperatur 1.

Der Behälter ist thermisch isoliert. In einem Speicher **(4)** mit hochwirk-samer thermischer Isolation befindet sich flüssiger Wasserstoff. Die Brennstoffzufuhr **(6)** zur Arbeitsmaschine erfolgt dosiert nach bereits bekannten und erprobten Methoden.

Weiterhin wird gezeigt, dass aus dem Konzept des Einsatzes von zwei Energieträgern zwei Expansionstakte resultieren.

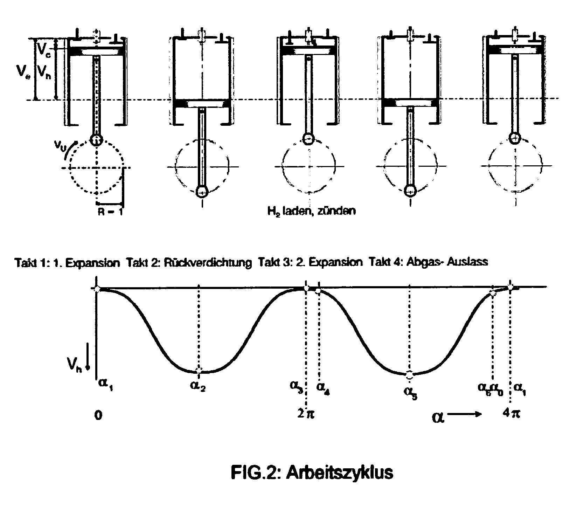

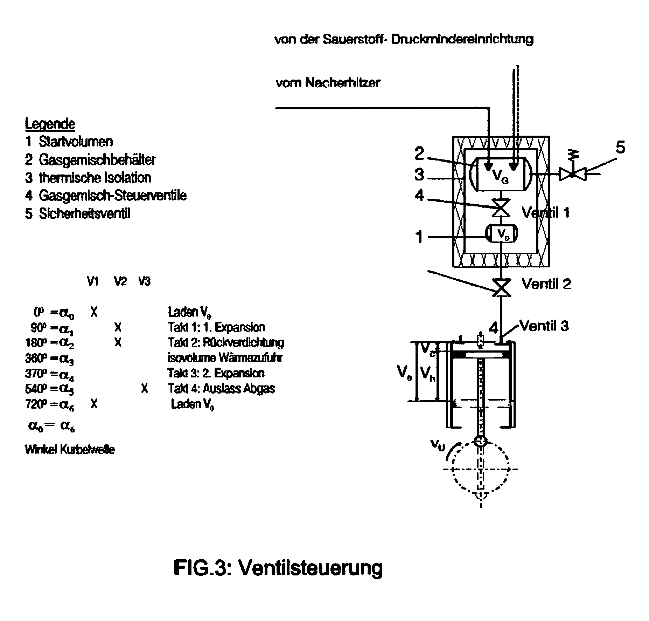

In **FIG. 2** und **FIG. 3** Abbildung sind der Ablauf des gesamten Arbeits-zyklus und seine Steuerung dargestellt. Zur Erläuterung der Steuerung ist die Arbeitsmaschine mit einem H₂- Einlassventil (1), einem Gasgemisch- Auslassventil (2) und einer Zündkerze (3) versehen.

Der gesamte Arbeitszyklus besteht aus zwei Kurbelwellenumdrehungen mit zwei Arbeitstakten 1 und ist in **FIG. 2** Abbildung in einem Diagramm mit Winkelangaben im Bogenmaß dargestellt.

Der *einleitende Expansionsvorgang* muss unter festgelegten Bedingungen ablaufen. Das Gasgemisch befindet sich deshalb im *Gasgemischbehälter* mit dem Volumen **VG** in **FIG.3** **(2)** unter *definierten* und konstant zu haltenden *Betriebsbedingungen* mit den Zustandswerten p₀, vo, T₀1.

Bei gegebenem Expansionsvolumen *Ve* = *Vc + Vₕ* (Gleichung 1) darf sich jedoch nur das Volumen **V0(1)** *definierter Größe* entladen, um zu den gewünschten Zustandswerten 1.1 am Ende der ersten Expansion zu führen 1.

Das Volumen Vo soll deshalb *Startvolumen* genannt werden, weil es sich am Beginn eines jeden Arbeitszyklus in einer ersten Expansion in die Arbeitsmaschine entlädt, worauf die Rückverdichtung in das Kompressionsvolumen Vc des Motors erfolgt 1.

Der *Gasgemischbehälter* ist ein Puffervolumen, das mehrere Arbeitszyklen aus V₀ ermöglicht.

Zur Steuerung des gesamten Arbeitsprozesses sind Gasgemisch- Steuerventile **(4)** erforderlich, welche die zyklische Füllung und Entleerung von **V** 0 und **Motor** steuern. Sie ersetzen deshalb die Ventile des Motors. Dessen Auslassventil ist als Ventil 3 bezeichnet worden. Es wird Teil einer *eigenständigen Einrichtung,* dem *Gasgemischverteiler,* in der die gesamte Steuerungsfunktion des Gasgemischs vereinigt werden soll 1. Den Status der Ventile in Abhängigkeit von den Takten zeigt **FIG. 3** Abbildung*.* Zum Schutz der Behälter **V₀** und **V_{G}** dient ein Sicherheitsventil **(5).**

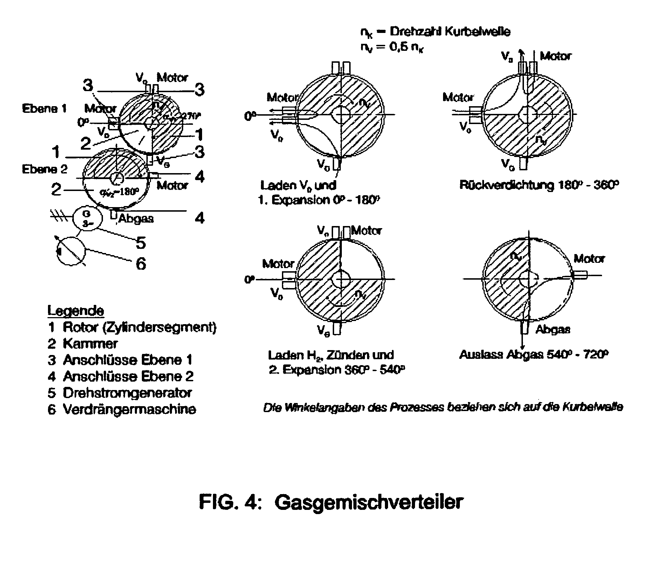

Die eigenständige Einrichtung zur Steuerung des Arbeitsmediums soll als *Gasgemischverteiler* 3 bezeichnet werden **FIG. 4** .

Er übernimmt als *konstruktive Einheit* die Aufgabe der bekannten Ventilsteuerung von Brennkraftmaschinen durch Nockenwellen, Einlass- und Auslassventile und verbindet die Funktionskomponenten Start-volumen **V0**, Gasgemischbehälter **VG** und **Rekuperator** mit dem **Motor** 3.

Der Gasgemischverteiler besteht aus einem Rotor **(1)**, der in einer zylindrischen Kammer **(2)** drehbar angeordnet ist. Von dieser führen die Gehäuseanschlüsse **(3)** der Kammer zu den Komponenten **Motor,** Startvolumen Vo und Gasgemischbehälter VG. Diese werden vom Rotor bei Drehung entsprechend der Funktion der Komponenten im Prozess verschlossen oder freigegeben. 3.

Dieser Rotor für die Gasgemischzuführung hat die Form eines *Zylindersegments von 2700*3*.*

Auch das Abgas muss separat gesteuert werden. Deshalb besteht der Gasgemischverteiler aus zwei getrennten Kammern und zwei unter-schiedlich geformten Rotoren 3.

Sie bilden jedoch für jeden Zylinder der Maschine eine konstruktive Einheit. Die Kammern werden in FIG. **4** als Ebene 1 für die Gasgemischzuführung und Ebene 2 für die Abgasabfuhr bezeichnet.

Der Rotor für die Abgasabfuhr ist ein *Zylindersegment von 1800* 3*.*

Die Gehäuseanschlüsse sind räumlich mit (4) festgelegt und verbinden den **Motor** mit dem **Rekuperator.**

Die Welle der Gasgemischverteiler ist so mit der Kurbelwelle verbunden, dass sie bei zwei Kurbelwellenumdrehungen genau eine Umdrehung ausführt 3.

entsprechend der Kolbenstellung eines jeden Zylinders muss die Stellung jedes zugeordneten Gasgemischverteilers eingestellt werden.

An die Welle der Verteiler werden ein Drehstromgenerator **(5)** und die Verdrängermaschine **(6)** für die Wasserförderung angeschlossen 3.

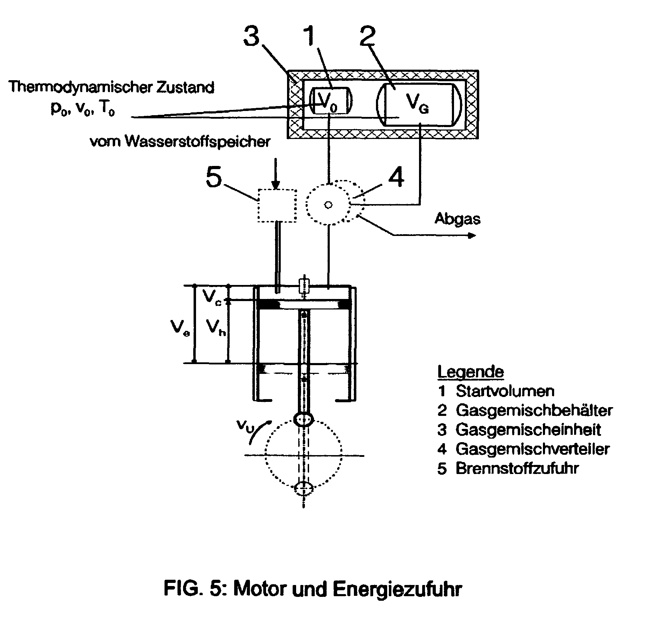

Durch den Gasgemischverteiler wird die Steuerung und damit die Konstruktion des Motors vereinfacht **FIG. 5** Abbildung. Dieser benötigt keine Nockenwellen und Ventile mehr, sondern ist mit den Funktions-komponenten des Prozesses durch den Gasgemischverteiler **(4)** verbunden. Die Translationsbewegung der bekannten Motorventile wird durch die Rotationsbewegung des Gasgemischverteilers ersetzt. Die Zufuhr von Wasserstoff und Zündung im Motor erfolgt über die Brennstoff-dosierung **(5)** nach bekannten Verfahren.

Das Startvolumen *V0,* **(1)** und der Gasgemischbehälter *VG*, **(2)** sind zu einer thermisch isolierten *Gasgemischeinheit* **(3)** zusammengefasst.

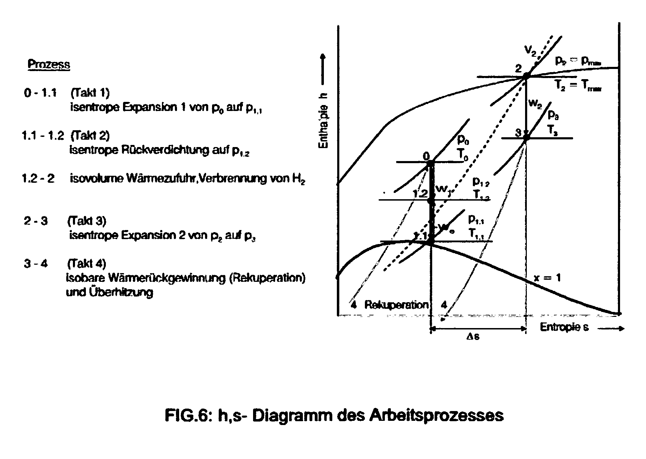

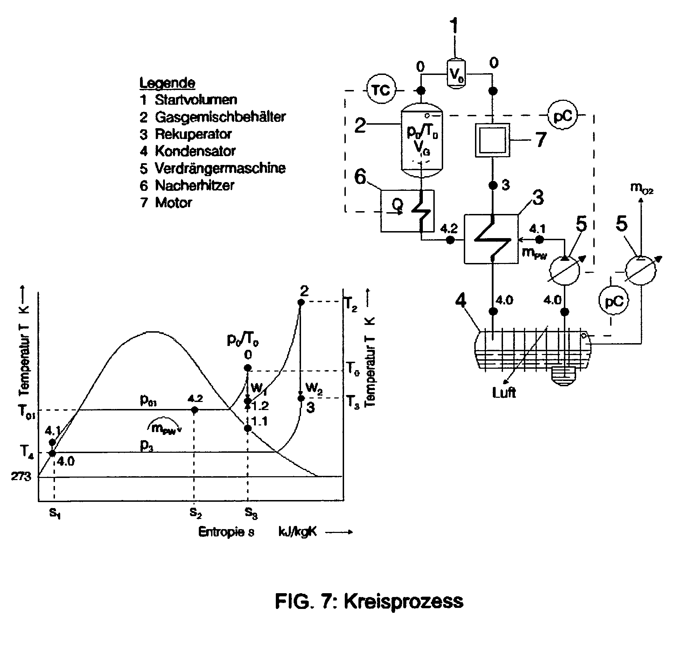

Der gesamte Arbeitsprozess kann sinngemäß in einem h,s- Diagramm **FIG. 6** oder T,s- Diagramm **FIG.7** Abbildung von Wasserdampf dargestellt werden, weil dieser die überwiegende Komponente des Gasgemischs ist. In **FIG. 6** Abbildung befindet sich das Gasgemisch im Punkt 0 mit den Zustandswerten **p0, v0, T0** mit der Gesamtmasse *mg = mW + mo* (Gleichung 2) der Komponenten Wasserdampf und Sauerstoff. Der Wasserdampfanteil befindet sich im *überhitzten Bereichjenseits* von x = 1.

Das Startvolumen **V0** definierter Größe ist geladen. Der Prozess beginnt damit, dass sich in der *ersten Expansion* dieses Volumen isentrop in die Maschine entlädt 1.

Die Größe des Endvolumens beträgt *V1.1 = (V0 + Ve*) (Gleichung 3). Hierbei erreicht der Kolben den unteren Totpunkt. Der Zustand des Gasgemischs hat im Punkt **1.1** die Werte **p1.1** und **T1.1**. Der Wasserdampf ist noch immer überhitzt.

Von hier aus findet die isentrope Rückverdichtung des Gasgemischs in das Kompressionsvolumen V_{c} des Motors statt 1 .

Das Gesamtvolumen dieses Vorgangs hat die Größe *V₁.₂* = *(V0 + VG*) (Gleichung 4). Die Zustandswerte von Punkt **1.2** sind **p1.2** und **T1.2.** Diese Temperatur muss niedriger sein, als 560°C, die Zündtemperatur von Wasserstoff. Der Kolben hat den oberen Totpunkt erreicht und das Startvolumen **V0** wird nun vom Kompressionsvolumen **Vc** getrennt. In diesem ist nun für den zweiten Teil des Arbeitsprozesses die Prozessmasse **mP** vorhanden. Das Volumen **V0** enthält den Rest der Masse *mR = mg - mP (Gleichung* 5).

Der Takt1 von Punkt 0 nach Punkt 1.1 ist ein Arbeitstakt. Für die Rückverdichtung von Punkt 1.1 nach Punkt 1.2 wird jedoch die negative Expansionsarbeit **-we** benötigt, sodass nur die Differenz **w1** an der Kurbelwelle als mechanische Arbeit abgegeben wird.

Im Punkt **1.2** beginnt der *Verbrennungskraftprozess,* indem dosiert Wasserstoff zugeführt und gezündet wird. Hierdurch wird isovolum Wärme durch *innere Verbrennung* zugeführt, die in einer zweiten Expansion endet 1.

Der Druck **p₂** und die Temperatur **T₂** als Maximalwerte von **Punkt 2** sind durch die zulässige Materialbelastung konstruktiv festgelegt.

Es ist in **FIG. 6** Abbildung ersichtlich, dass neben der Teilarbeit **w1** auch die Rückverdichtung von Punkt 1.1 zum Punkt 1.2 einen Gewinn im Gesamtprozess darstellt, denn zum Erreichen von Punkt 2 muss weniger Brennstoff zugeführt werden: *q = Δs *(T2- T1.2)*/*2=mf*Ho<Δs *(T2* - *T1.1)*/*2*(Gleichung 6). *mf= Brennstoffmasse, Ho = Brennwert.*

Im Takt 3 erfolgt vom Punkt 2 zum **Punkt 3** isentrop die *zweite Expansion* mit Gewinn der Arbeit **w2**.

Der Zustand von **Punkt 3** mit der Temperatur **T₃** besitzt bei einem Druck p 3 nahe dem Umgebungsdruck noch eine hohe Innere Energie.

Durch einen Rekuperator wird diese Energie durch Kondensation weitgehend zurück gewonnen. 1.

Dies erfolgt bis zum **Punkt** 4, von dem aus wieder die Verdampfung im Kreisprozess beginnt.

Die geforderte mechanische Leistung der Maschine wird nicht durch den Expansionsprozess in Takt 1, sondern durch den Verbrennungskraft-prozess in Takt 3 durch die Dosierung der Wasserstoffmasse und damit durch die Erhöhung von Drehmoment und Drehzahl eingestellt. Beide Prozesse ergeben ein mittleres Moment an der Kurbelwelle.

Im Gegensatz zu den bekannten Brennkraftmaschinen wird das Abgas nicht ins Freie abgeführt, sondern das Kondensat bleibt nach der Abgabe von Wärme im Rekuperator als Komponente des Arbeitsmediums in einem *geschlossenen Kreisprozess*1*;* dieser ist in **FIG. 7** Abbildung abgebildet.

Deshalb ist als Energieinhalt des verbrannten Wasserstoffs nicht der untere Heizwert *Hu,* sondern der Brennwert *Ho* anzusetzen 1.

In jedem Zyklus ist immer eine Prozessmasse **mP** nach der Rückver-dichtung des Taktes 2 im Kompressionsvolumen Vc eingeschlossen. Sie besteht aus der Summe der Wasserdampfmasse und der Sauerstoff-masse: *mP= (mPW + mPO)* (Gleichung 7). Diese Zusammensetzung verändert sich jedoch nach der Verbrennung der zugeführten Wasserstoffmasse mH in der Weise, dass die Wasserdampf-masse zunimmt und die Sauerstoffmasse abnimmt. Dies hat zwei Konsequenzen: 1. Die Wassermasse im Kondensator **(4)** nimmt zu und muss abgeführt werden; 2. die Sauerstoffmasse im Gasgemischbehälter nimmt ab und muss ergänzt werden.

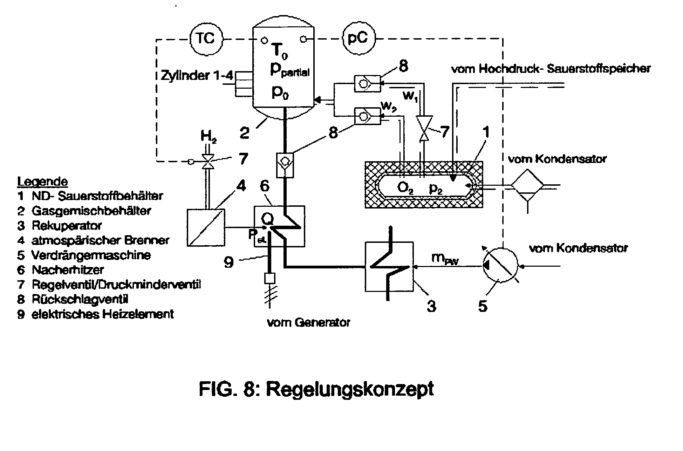

Ein Überschuss von Sauerstoff, der nicht zur Verbrennung benötigt wurde, würde zu einem Druckanstieg im Kondensator führen und zudem den Verlust des Energieträgers bedeuten. Durch eine Druckregelung (pC) des Kondensatordrucks führt eine Verdrängermaschine (5) den Überschuss wieder in den Niederdruckbehälter zurück FIG. 8 (1) Abbildung .

Die Zusammensetzung des Gasgemischs muss wegen der Bedingungen des Punktes "0" unverändert bleiben. Deshalb wird aus dem Kondensator immer eine konstante Masse **mPW** in den Kreislauf gefördert.

Die Pumpe **(5)** ist deshalb eine Verdrängermaschine. Ihre Förderleistung ist proportional der Motordrehzahl. Sie wird **FIG. 4** (6) ebenso wie der Drehstromgenerator **FIG. 4** **(5),** direkt an die Welle des Gasgemischverteilers angeschlossen 3 .

Nach erfolgter zweifacher Arbeitsleistung **w1** und **w2** in **FIG. 7** Abbildung besitzt die Prozessmasse des Gasgemischs im Punkt 3 eine Wärme entsprechend der Fläche zwischen den Punkten **3** und **4.0** sowie der Abszisse. Diese Abwärme auf *hohem Temperaturniveau* kann am Ende des Zyklus weitgehend durch Rekuperation zurück gewonnen werden und vermindert den Wärmebedarf, um den Zustand "0" des nächsten Zyklus zu erreichen 1. Die für den Ausgangszustand **p0, T0** erforderliche Wärmemenge entspricht der Fläche zwischen den Punkten **0** und **4.0** unterhalb der Linie des Verdampfungsdrucks **p01** bis zur Abszisse.

Die Rückgewinnung erfolgt, indem das Abgas durch den Rekuperator **(3)** geleitet wird, wo es seine Wärme bis in die Nähe vollständiger Kondensation abgibt. Der Rekuperator muss für Phasenänderung des Mediums in beiden Richtungen ausgelegt sein. In einem luftgekühlten Kondensator mit Kondensatsammler **(4)** findet die weitere Kondensation und Sammlung des Kondensats statt. Von dort wird es durch die Verdrängermaschine **(5)** durch den Rekuperator **(3)** und den Nacherhitzer **(6)** in den Gasgemischbehälter **(2)** gedrückt, wo es isobar verdampft und die Zustandsgrößen **p0** und To erreicht. Diese Temperatur wird durch eine Temperaturregelung (TC) konstant gehalten. Wenn durch Rekuperation eine Wärme zwischen den Entropiewerten **s1** und **s2** bis zum Punkt 4.2 zurück gewonnen wird, ist der Rest zwischen **s2** und **s3** bis zum Punkt 0 durch den Nacherhitzer **(6)** zu decken.

Daher erfolgt die Energiezufuhr des Gesamtprozesses durch *innere Verbrennung* im Motor und durch *äußere Verbrennung* im Nacherhitzer 1.

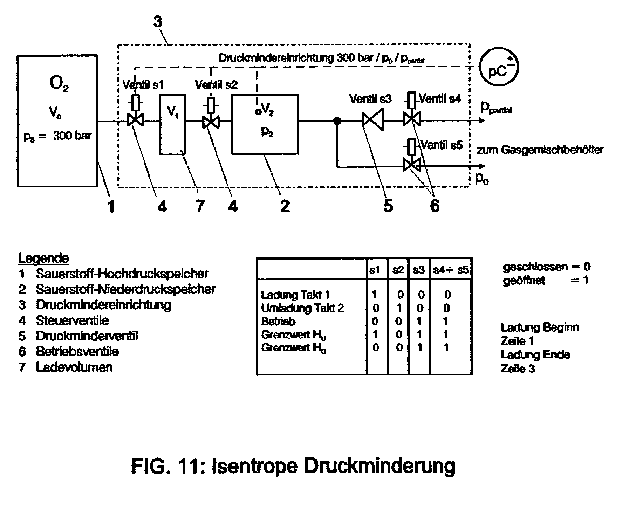

Durch die Verringerung des Sauerstoffgehaltes im Gasgemischbehälter **V G** nimmt bei konstanten Werten von mPW der Komponente Wasser und der Temperatur **T0** der Druck **p0** im Behälter ab. Es wird selbsttätig durch die Druckmindereinrichtung **FIG.1** **(3);** **FIG.11** **(3)** aus dem Sauerstoff-Niederdruckspeicher **FIG.1** **(2);** **FIG.11** **(2)** Abbildung Sauerstoff bei einem konstanten Druck **p2 = p0** nachgeliefert.

Dadurch wird das Gasgemisch selbsttätig in einer für Wasserstoff zündfähigen Zusammensetzung gehalten 1.

Das gesamte Konzept der Prozessregelung zeigt **FIG. 8** Abbildung. Es umfasst den bereits beschriebenen Kreisprozess sowie die Sauerstoffversorgung und berücksichtigt auch den Vorgang des "Anfahrens".

Wenn im Auslegungspunkt "0" eine Sauerstoffmasse mO benötigt wird, dann ist im Gasgemischbehälter VG bei Umgebungstemperatur ein Partialdruck erforderlich von ***p**partial = 1*/*VG* *( *mO* **Ri *393K)* (Gleichung 8). Ri =259,8J/kgK für Sauerstoff

Dies ist der Sollwert W₁, mit dem das Druckminderventil **(7)** den Sauerstoff aus dem Niederdruckbehälter **(1)** bereitstellt. Auf diesen Partialdruck wird der Gasgemischbehälter (2) bei jedem Anfahrvorgang aufgefüllt, falls der Gesamtdruck durch Kondensation des Wasseranteils unter diesen Wert abgesunken ist.

Der Druck p2 dieses Behälters wird ebenfalls in engen Grenzen konstant gehalten. Sein Sollwert ist w₂ einer zweiten Einspeisung, die von der Druckmindereinrichtung FIG.11 (3) Abbildung freigegeben wird, wenn der Sollwert p0 im Gasgemischbehälter erreicht ist.

Von diesem Zeitpunkt an wird jeder Druckabfall im Gasgemischbehälter infolge von Sauerstoffverbrauch selbsttätig ausgeglichen wegen p2 > p0. Das Gasgemisch bleibt damit immer in einer für Wasserstoff zündfähigen Zusammensetzung.

Beide Einspeisungen von Sauerstoff sind durch Rückschlagventile **FIG. 8** (8) Abbildung voneinander entkoppelt; ebenso die Einspeisung von Wasserdampf.

Durch den Partialdruck oder durch einen höheren Restdruck des vorher-gehenden Betriebs im Gasgemischbehälter kann der Motor angelassen werden. Nach der ersten Rückverdichtung sorgt der Brennkraftprozess für den weiteren Betrieb. Der Kreisprozess wird mit ansteigenden Werten p und T fortgesetzt, bis die Zustandswerte po, To erreicht sind. Die Temperatur To wird durch eine Regelung (TC) konstant gehalten, die auf das Regelventil FIG. 8 (7) der Wasserstoffzufuhr wirkt. Diese Temperatur ist wegen des größeren Masseanteils von Wasser *mPW > mPO* und dessen größerer spezifischen Wärme c*pW* > *cpO* besonders von der Komponente Wasser abhängig. Der Druck p0 ist bei konstanter Temperatur To von der Sauerstoffmasse mO im Gasgemischbehälter abhängig. Zu hohe Druck-werte sind deshalb nur durch zu große Mengen Wasser im System möglich, beispielsweise durch Kondensat. Deshalb wirkt eine Druck-regelung (pC) auf die Verdrängermaschine (5), deren Förderleistung in das System veränderbar sein muss.

Wegen dieser Zusammenhänge wird zu hoher Druck im Gasgemisch-behälter durch die Komponente Wasser und zu niedriger Druck durch die Komponente Sauerstoff ausgeregelt 1.

Wärmequellen des Nacherhitzers (6) sind ein mit Wasserstoff durch äußere Verbrennung betriebener atmosphärischer Brenner **(4)** und ein elektrisches Heizelement **(9),** mit dem durch den Drehstromgenerator **FIG. 4** **(5)** Bremsenergie zurück gewonnen werden kann 1.

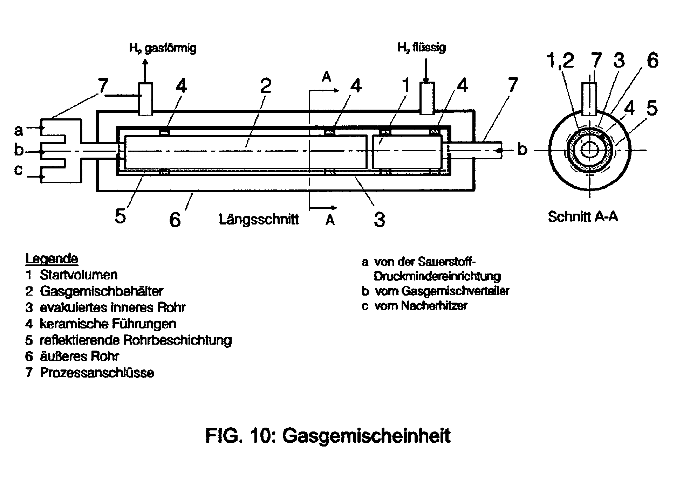

Besteht der Motor beispielsweise aus vier Zylindern, dann hat der Gasgemischbehälter **(2)** die Funktion eines Hauptbehälters, an den die Gasgemischeinheiten **FIG. 5** **(3);** **FIG. 10** Abbildung der Zylinder angeschlossen sind.

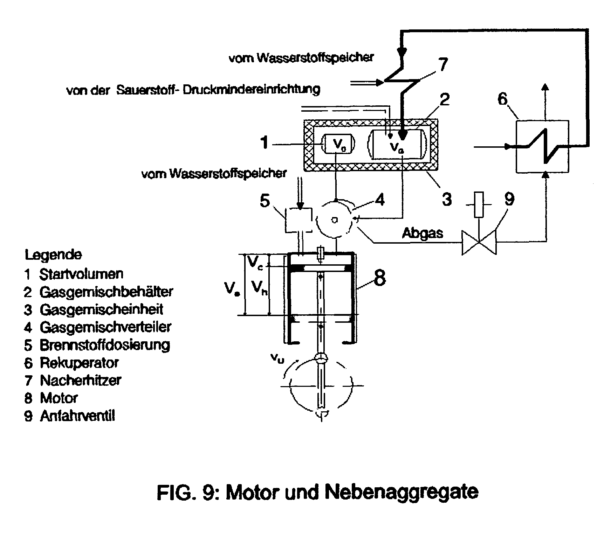

Die Anordnung von Arbeitsmaschine und Nebenaggregaten, soweit diese mit der Maschine verbunden sind, zeigt **FIG. 9** Abbildung . Die Steuerung von Gasgemisch und Abgas des Motors **(8)** erfolgt durch den Gasge-mischverteiler **(4)**. Dem Motor wird durch die Brennstoffdosierung **(5)** vom Wasserstoffspeicher **FIG. 1** **(4)** Brennstoff zugeführt. Das Abgas gibt im Rekuperator **(6)** seine Restwärme ab, wodurch die benötigte Wasser-masse verdampft und durch den Nacherhitzer **(7)** dem Gasgemisch-behälter mit den Zustandswerten "0" zugeführt wird. Dieser wird bei Bedarf durch die Sauerstoff- Druckmindereinrichtung **FIG. 11** **(3)** nachgeladen. Die offenen Anschlüsse des Rekuperators sind mit dem Kondensator **FIG. 7** **(4)** verbunden, welcher nicht dargestellt ist. Das Anfahrventil **(9)** trennt den Motor vom Rekuperator solange, bis im Gasgemischbehälter durch die Verdampfung einer ausreichenden Wassermasse der Nenndruck p0 erreicht ist.

Die beschriebenen Funktionen von *Startvolumen* **FIG. 5** **(1)** und *Gasgemischbehälter* **FIG*.* 5** **(2)** Abbildung werden in einer thermisch gegen Wärmeverluste durch Strahlung, Leitung und Konvektion isolierten *konstruktiven Einheit,* der *Gasgemischeinheitzusammengefasst* 4**FIG. 10** Abbildung.

Hierbei befinden sich diese Volumen in einem evakuierten inneren Rohr **(3)**, welches innen mit einer reflektierenden Beschichtung **(5)** versehen ist. Die Komponenten sind in keramischen Führungen **(4)** beweglich geführt 4.

Sie sind durch Prozessanschlüsse **(7)** mit der Sauerstoff-Druckminder-einrichtung **FIG. 11** **(3)** Abbildung dem Nacherhitzer, **FIG. 9** **(7)** und dem Gasgemischverteiler **FIG. 9** **(4)** Abbildung verbunden 4.

Das innere Rohr ist von einem äußeren Rohr **(6)** umgeben, dessen Innenraum als Wärmeaustauscher zur Verdampfung von flüssigem Wasserstoff dient. Dieser wird über die Prozessanschlüsse **(7)** zu- und abgeführt. Zugleich dient dieser Raum der Kühlung der gesamten Einheit gegen die Umgebung 4. Diese ist zusätzlich mit einer thermischen Isolierung **FIG. 3** **(3)** Abbildung umgeben.

Wenn der Motor aus mehreren Zylindern besteht, dann entfällt der Anschluss "c". Der Anschluss "a" wird in diesem Fall mit dem Haupt-behälter **FIG. 8** **(2)** Abbildung verbunden.

Um den Sauerstoff, der mit einem sehr hohen Druck von beispielsweise 300 bar gespeichert wird, mit einem Betriebsdruck p₂ = p₀ bereitzustellen, ist die isenthalpe Drosselung als stark verlustbehaftete Methode unge-eignet.

Es wird deshalb eine Druckmindereinrichtung **FIG. 11** Abbildung eingesetzt, durch die der unter hohem Druck stehende Sauerstoff verlustarm isentrop unter Abkühlung auf die benötigten Betriebsdrücke entspannt wird 2.

Das Prinzip besteht darin, dass ein kleines Ladevolumen **(7) V₁** aus dem Hochdruckspeicher **V0****FIG. 1** **(1);** **FIG. 11** **(1)** gefüllt, und dann von diesem getrennt wird. In einem zweiten Schritt wird dieses Volumen in ein größeres Volumen **V2**, den *Niederdruckspeicher***(2)** entspannt. Dies erfolgt *unter Abkühlung* isentrop aus der Inneren Energie des Gases 2. *p₁ =ps*/ *((V0 + V1)* / *V0)_{K}* (Gleichung 9) Ladung Schritt 1 *p2 = p1*/*(V2* / *V0)_{K}* ( Gleichung 10) Umladung Schritt 2. p_{S} = Druck im Hochdruckspeicher; K = 1,399 für Sauerstoff.

Dieser in engen Grenzen konstante Betriebsdruck im *Niederdruckspeicher* dient der Erhaltung des konstanten Drucks **p0** im Gasgemischbehälter bei Sauerstoffverbrauch durch den Verbrennungskraftprozess 2.

Hierdurch wird das Gasgemisch selbsttätig in einer für den zugeführten Wasserstoff zündfähigen Zusammensetzung gehalten 1.

Durch ein Druckminderventil **(5)** wird ein zweiter konstanter Betriebsdruck zum Anfahren in Höhe von pₚₐᵣₜᵢₐₗ bei Umgebungstemperatur bereitgestellt 2.

Beide Betriebsdrücke werden abhängig vom Betriebszustand "Anfahren" oder "laufender Betrieb" durch die Betriebsventile s₅ und s₆ freigegeben. Der gesamte Umfüllvorgang wird durch die Steuerventile **(4)** bewirkt. Der programmgemäße Ablauf ist aus der Funktionstabelle ersichtlich.

Die Druckmindereinrichtung **(3)** besteht als funktionelle Einheit aus dem Ladevolumen V₁ **(7)**, dem *Niederdruckspeicher***(2)** mit den zugehörigen Steuerventilen **(4)** S₁ und S₂, dem Druckminderventil **(5)** S₃ sowie den Betriebsventilen **(6)** S₄ und S₅2.

Wird ein unterer Grenzwert **pᵤ** des Drucks im Niederdruckspeicher **(2)** erreicht, wird bei laufendem Betrieb so lange aus dem Hochdruckspeicher **(1)** nachgeladen, bis der obere Grenzwert **po** erreicht ist.

Der gesamte Vorgang wird durch Grenzwertgeber für den oberen und unteren Grenzwert veranlasst und erfolgt durch die programmgemäße Steuerung der Ventile 2.

### Gewerbliche Anwendbarkeit

Die Maschine eröffnet einen Lösungsansatz für eine zukünftige ökonomische und ökologisch verträgliche Massenmobilität durch den Verzicht auf fossile Treibstoffe. Sie löst zudem das Problem der Reichweite von Kraftfahrzeugen, die mit Wasserstoff betrieben werden, durch den hohen Wirkungsgrad des Arbeitsprozesses.

## Patentansprüche

1. **Hybride Expansions-Verbrennungskraftmaschine mit Ventilsteuerung zum Betrieb mit regenerativen Energieträgernbestehend aus einem** Hochdruckspeicher für gasförmigen Sauerstoff; einer verlustarmen *isentropen Druckmindereinrichtung* für Sauerstoff, einem thermisch wirksam isolierten Behälter für flüssigen Wasserstoff; einer Dosier- und Zündeinrichtung für Wasserstoff; einem *Gasgemischverteiler* zur Steuerung des Arbeitsmediums ; einer *Gasgemischeinheit* zur Prozessführung des Arbeitsmediums; einer Einrichtung zur Rückgewinnung von thermischer Energie innerhalb des Prozesses und von mechanischer Bremsenergie; einer bekannten Verbrennungskraftmaschine ohne Ventile, zur Umwandlung der thermischen Energie des Arbeitsmediums in mechanische Energie; **dadurch gekennzeichnet dass** als Energieträger *flüssigerwasserstoff* und *Sauerstoff* unter *hohemDruck* eingesetzt werden; das Arbeitsmedium in der Maschine ein *Gasgemisch* ist, das aus *überhitztemwasserdampf* und *Sauerstoff* unter *hohemDruck* besteht; dieses *Gasgemisch* in einem *Gasgemischbehälter***(FIG.9 (2))** in einem *definiertenphysikalischenZustand* von Druck und Temperatur konstant gehalten wird; zu hoher Druck im Gasgemischbehälter durch die Komponente Wasser, und zu niedriger Druck durch die Komponente Sauerstoff ausgeregelt wird; das Gasgemisch selbsttätig in einer für Wasserstoff zündfähigen Zusammensetzung gehalten wird; sich der *Arbeitsprozess* dieses Gasgemischs aus *zweiunterschiedlichen Teilen* zusammensetzt; der erste Teil ein *Expansionsvorgang* des Gasgemischs aus einem *Startvolumen***(FIG.9** (1)) definierter Größe und anschließender Rückverdichtung in das Kompressionsvolumen des Motors ist; der zweite Teil ein *Verbrennungskraftprozess* ist, der aus *innererverbrennung* von Wasserstoff, der dem Gasgemisch dosiert zugeführt wird, und anschließender zweiter Expansion besteht; das Gasgemisch als Arbeitsmedium innerhalb des Arbeitsprozesses durch eine eigenständige Einrichtung, den *Gasgemischverteiler* gesteuert wird, welcher die Ventile bekannter Verbrennungskraftmaschinen ersetzt; die Arbeitsmaschine deshalb eine *hybride Expansions- Verbrennungs-kraftmaschine mit Ventilsteuerung zum Betrieb mitregenerativen Energieträgern* ist; die Umwandlung von thermischer Energie in mechanische Energie durch das Gasgemisch unmittelbar im Zylinder einer bekannten Verbrennungskraft-maschine erfolgt; der gesamte Arbeitszyklus aus zwei Umdrehungen der Kurbelwelle und zwei Arbeitstakten besteht; die Abwärme des Gasgemischs am Ende der zweiten Expansion durch einen Rekuperator weitgehend wieder zurück gewonnen wird; das Abgas nicht ins Freie geführt wird, sondern das Kondensat als Komponente des Arbeitsmediums in einem *geschlossenen Kreisprozess* bleibt; als Energieinhalt des verbrannten Wasserstoffs deshalb nicht der untere Heizwert *Hu,* sonden der Brennwert *Ho* genutzt wird; die Bremsenergie durch einen Drehstromgenerator genutzt werden kann, der diese durch ein elektrisches Heizelement in einem Nacherhitzer abgibt; der restliche Wärmebedarf zur Erzielung des Ausgangszustandes durch *äußere Verbrennung* von Wasserstoff in einem atmosphärischen Brenner dieses Nacherhitzers erzeugt wird; die Energiezufuhr des Gesamtprozesses daher durch *innereVerbrennung* im Motor und durch *äußereVerbrennung* im Nacherhitzer erfolgt.

2. **Isentrope Druckmindereinrichtung nach Anspruch 1 dadurch gekennzeichnet dass** der unter hohem Druck stehende Sauerstoff durch diese Einrichtung verlustarm unter Abkühlung auf die Betriebsdrücke entspannt wird; diese Einrichtung funktionell aus einem Ladevolumen, einem Niederdruck-speicher, zwei Steuerventilen einem Druckminderventil und zwei Betriebs-ventilen besteht ; die verlustarme Druckminderung dadurch verwirklicht wird, dass ein aus dem Hochdruckspeicher geladenes, und dann durch ein Ventil von diesem getrenntes kleines Ladevolumen isentrop in den Niederdruckspeicher mit größerem Volumen umgeladen wird; die Steuerung dieses Vorgangs durch Grenzwertgeber für einen oberen und unteren Grenzwert veranlasst und durch programmgemäße Steuerung der Ventile erfolgt; es die Aufgabe des Niederdruckspeichers ist, den Betriebsdruck im Gasgemischbehälter wegen des Sauerstoffverbrauchs durch den Brennkraftprozess aufrecht zu erhalten; die Aufgabe des Druckminderventils die Bereitstellung des benötigten Partialdrucks im Gasgemischbehälter bei Umgebungstemperatur zum Anfahren ist.

3. **Gasgemischverteiler nach Anspruch 1 wobei** dieser als *konstruktiveEinheit* die Funktion der durch Nockenwellen gesteuerten Einlass- und Auslassventile von Brennkraftmaschinen übernimmt, und die Funktionskomponenten Motor, Startvolumen Gasgemischbehälter, und Rekuperator miteinander verbindet (FIG. 4); **dadurch gekennzeichnet dass** er aus einer zylindrischen Kammer mit Rotor besteht, welcher bei Drehung die Gehäuseanschlüsse der Kammer für diese Komponenten entsprechend ihrer Funktion im Arbeitsprozess verschließt oder freigibt; er für die Zuführung des Gasgemischs und für die Abfuhr des Abgases zwei dieser Einheiten für jeden Zylinder des Motors vorhanden sind; der Rotor ein Zylindersegment von 270° im Gehäuse für die Gasgemisch-zuführung und von 180° im Gehäuse für die Abgasabfuhr ist; die Welle der Rotoren so mit der Kurbelwelle verbunden ist, dass sie bei zwei Kurbelwellenumdrehungen genau eine Umdrehung durchführt; mit der Rotorwelle ein Drehstromgenerator und die Verdrängermaschine für die Wasserförderung verbunden sind.

4. **Gasgemischeinheit nach Anspruch 1 wobei** das Startvolumen und der Gasgemischbehälter zu einer thermisch gegen Wärmeverluste durch Strahlung, Leitung und Konvektion isolierten Funktionseinheit zusammengefasst sind (FIG. 10), **dadurch gekennzeichnet dass** das Startvolumen und der Gasgemischbehälter in ein evakuiertes, innen mit einer reflektierenden Beschichtung versehenes Rohr eingebaut sind; diese Komponenten in keramischen Führungen beweglich in dem Rohr gelagert sind; sie durch die Prozessanschlüsse mit der Sauerstoff-Druckmindereinrichtung, dem Nacherhitzer und dem Gasgemischverteiler verbunden sind; das innere Rohr von einem äußeren Rohr umgeben ist, wobei der Zwischenraum als Wärmeaustauscher zur Verdampfung von flüssigem Wasserstoff und der Kühlung der gesamten Einheit gegen die Umgebung dient.
